# EUROPEAN PATENT APPLICATION

(11) **EP 4 762 920 A1**
(43) Date of publication of application: **24.06.2026**
(21) Application number: 24855189.7
(22) Date of filing: 01.07.2024
(51) Int. Cl.: A01K 61/00, A01K 61/10, A01K 61/60, A01K 63/00, A01K 63/02, B63B 13/00, B63B 35/14, B63B 35/24, B63B 35/26, B63B 35/28, B63B 35/34, B63B 35/38, B63B 35/44

(54) **CONICAL RIGID CAGE**

(30) Priority: 18.08.2023 CL 202302457
(71) Applicant: Buschmann Schirmer, Walter Francisco Alfredo, Puerto Montt, 5480000 (CL)
(72) Inventor: Buschmann Schirmer, Walter Francisco Alfredo, Puerto Montt, 5480000 (CL)
(74) Representative: ABG Intellectual Property Law, S.L.
(86) International application number: PCT/CL2024/050066
(87) International publication number: WO 2025/039091

(57) **Abstract**

The invention corresponds to a conical rigid cage comprising at least one floating conical rigid structure (1), for forming a variable interior three-dimensional volume for aquaculture cultivation, which comprises as basic constituent elements, at least one cover (2), at least one perimetral conical structure (3), and at least one independent vertically displaceable bottom (4), wherein the at least one perimetral conical structure (3) comprises at least one upper tubular ring or section (7) and at least one lower tubular ring or section (8), wherein the at least one upper tubular ring or section (7) has a diameter smaller than the diameter of the at least one lower ring or section (8), and are joined together through oblique tubular struts or columns (10), forming an acute angle (α) in the X-Y plane, which corresponds to the longitudinal axis X and the vertical axis Y, of the junction between said at least one upper tubular ring or section (7) and said at least one lower ring or section (8).

## Description

### FIELD OF THE INVENTION

The present invention falls within the field of aquaculture and relates to a conical rigid cage for use in aquaculture comprising at least one floating conical rigid structure having at least one independent bottom that is vertically displaceable to vary the volume of the cultivation zone and/or facilitate the harvesting of fish, as well as facilitate maintenance and/or repairs.

### BACKGROUND OF THE INVENTION

Systems for fish cultivation in the aquaculture industry are well known, and are basically constituted by a floating structure, a fish net that hangs toward the bottom of the body of water from said floating structure, and an anchoring system that allows maintaining the shape of the cultivation module, as well as keeping it in its installation location.

Systems for fish cultivation, whether square, rectangular, round, or of another shape, allow forming or providing a volume of water in which the fish to be cultivated are confined. Generally, cultivation systems are configured with a determined size which defines the size of the perimeter of the cage structure, and which must have a configuration such that it maintains its resistance and does not collapse due to the action of waves, marine currents, as well as adverse weather conditions. The anchoring system is of great importance for maintaining the shape of the module.

Traditionally, the coastal edge, associated with zones protected from waves and marine currents, has been preferred for locating structures in said activity.

Notwithstanding the foregoing, the aquaculture industry in recent years has focused its efforts on configuring cage structures that have a shape, structure, and anchoring systems that are more resistant and robust to allow forming cultivation centers in more exposed or offshore zones.

Traditional aquaculture is generally carried out in protected areas having shallow waters, where contamination is not easy to solve, water quality is not good, and sanitary conditions in general are a problem in cultivation. Positioning the cultivations near the coast and the constant use of a determined zone or geographical area generates, among other problems, the risk of contamination produced by the activity itself, with consequences for the environment and due to effects of contagion or contamination by external agents, such as microalgae, increase in water temperature, diseases, decrease in oxygen, among others.

Nowadays, the industry is working on development to carry out cultivation in more exposed zones or in open sea, to avoid the contamination and sanitary problems that protected cultivation zones normally have. However, cultivation cages in open sea also require being anchored to keep them in place over time, as well as to maintain their shape, are sensitive to climate, and require very robust structural and anchoring configurations.

The worldwide need for food production and especially proteins continues to grow, making it necessary to have better spaces to satisfy both current and future demand. It is required to have new cultivation or fattening zones that allow decompressing the coastal zone.

Therefore, the task of a new positioning of productive activity in open sea or more exposed zones with more extreme conditions is not free from difficulties, since it will necessarily have to be moved to exposed oceanic zones, or high-energy zones, offshore or open sea zones, for which it becomes necessary to have cultivation centers that are capable of facing or moving away from complex situations from the point of view of adverse meteorological conditions, among others.

Currently, most cages for aquaculture are of articulated, flexible, or semi-flexible structures, which due to freedom of movement have the disadvantage of not being friendly to the stability of the nets, as well as being configured by elements joined together in an articulated manner which are subjected to a series of movements due to the oceanic and climatic conditions to which they are exposed by their location and/or placement in the sea, that leads to said articulated joints being subjected, over time, to a series of stresses, tensions, and tractions that ultimately deteriorate or break them, which implies that they must be maintained, repaired, or replaced, as well as endangering the complete structure, that may drift away due to collapse.

The cages currently used in aquaculture have the great disadvantage that the nets hanging from the floating structure of the cage have nowhere to be secured, being at the mercy of the movements caused by the currents and waves, thus decreasing their useful life, as well as normally having to perform more frequent maintenance and repairs over time, as a result of the deterioration suffered due to said conditions to which they are subjected.

The applicant and inventor of the present invention has an application currently pending at INAPI Chile, which describes and proposes as an object of protection a cage for aquaculture with a floating rigid structure, that solves the problem of preventing the cage structure from having interconnected articulated elements that generate movements between them in the cage arrangement, which favors the installation of aquaculture centers, and/or the durability of the cage over time, where extending the useful life of a cultivation center is allowed by not having said rigid cage structure with moving parts or wear elements. Notwithstanding that said rigid cage has numerous technical advantages, as well as different functionality from the prior art cages used in aquaculture today, however, said cage comprises a cultivation volume that does not allow being variable at will once installed in the cultivation center, and does not allow facilitating the displacement of certain structural components for purposes of facilitating harvesting and/or maintenance or replacement of the nets.

In accordance with the foregoing, the applicant has identified as a need the ability to have a rigid cage whose shape and configuration allows varying the cultivation volume easily, as well as facilitating harvesting and/or maintenance or replacement of the nets, and where its structure has a geometric shape that allows providing robustness to the structure without the need to increase the amount of construction material.

### SUMMARY OF THE INVENTION

The object of the invention is to provide a cage for aquaculture with a floating rigid structure of conical shape, configuration, and design with an independent vertically displaceable bottom that allows varying the volume of the cultivation zone, facilitates harvesting, facilitates maintenance or replacement of the nets, and/or where part of its constituent elements are formed by structures of hexagonal geometric figures, in such a way as to allow disaggregating and/or distributing forces efficiently through the structure, to maximize manufacturing and/or maintenance costs of the cage, as well as increase its useful life.

The invention provides as a solution a conical rigid cage comprising of at least one floating conical rigid structure (1), for forming a variable three-dimensional interior volume for aquaculture cultivation, which comprises as basic constituent elements, at least one cover (2), at least one perimetral conical structure (3), and at least one independent vertically displaceable bottom (4), wherein the at least one perimetral conical structure (3) comprises at least one upper tubular ring or section (7) and at least one lower tubular ring or section (8), wherein the at least one upper tubular ring or section (7) has a diameter smaller than the diameter of the at least one lower ring or section (8), and they are joined together through oblique tubular struts or columns (10), forming an acute angle (α) in the X-Y plane, which corresponds to the longitudinal axis X and the vertical axis Y, of the junction between said at least one upper tubular ring or section (7) and said at least one lower ring or section (8).

As a geometric structural design, the conical shape of the perimetral conical structure achieved by the difference in diameter between the upper and lower rings, gives greater robustness to the structure, providing as advantages a greater resistance with a minimum of material to be used and stability of the structure, greater internal cultivation volume, with fish net and anti-predator net systems, less structure volume above the water surface, greater stability of the structure when floating with the buoyancy provided by the lower flotation and/or ballastable ring, due to its greater diameter, extreme angles for unfavorable wave conditions, the diagonal struts or columns improve stability in oceanic wave conditions, since the weight distribution and the inclination configuration toward the center of the cage decreases the distance to the center of gravity.

The shape, configuration, and design of the conical rigid cage of the present invention allows a very efficient design, since the hexagonal geometric shape of the at least one cover and/or part of a section of the at least one independent vertically slidable bottom allows a uniform distribution of tensions, since they are distributed uniformly in all directions, which means that if pressure is applied to an area of the hexagon, that pressure will be distributed equally, which makes the structure strong and stable, providing extra strength to the stresses produced by waves, such as hogging stresses, sagging stresses, and torsion stresses, where the arrangement of its lateral walls with an opening angle provides greater resistance to the entire cage structure, which allows not needing a bottom joined to the structure forming the cage.

The fact that the bottom is configured to be linked independently and in a displaceable manner provides as advantages the ability to facilitate sanitary bath operations and/or harvesting, vary the cultivation volume, deepen the space and/or cultivation volume to deeper zones in the sea to avoid upwelling zones, by being able to displace said bottom at will, as well as the fact that the bottom is configured with at least one flat section with hexagonal geometric shape structures, provides numerous operational advantages, such as facilitating the arrangement of mortality and/or waste collection cones, bottom arrangement with collection tarps, among others.

### DESCRIPTION OF THE DRAWINGS

In order to help a better understanding of the characteristics of the invention, according to a preferred example of the practical embodiment thereof, a set of drawings is attached as an integral part of the description, wherein the invention has been represented in an illustrative and non-limiting manner.
Figure 1.- corresponds to an exploded lateral view of a conical rigid cage for aquaculture according to the present invention.
Figure 2.- corresponds to an upper perspective view of an exploded cross-section of the conical rigid cage of the present invention.
Figure 3.- corresponds to an upper view of a cross-section of the conical rigid cage of the present invention.
Figure 4.- corresponds to a lateral view of a cross-section of the conical rigid cage of the present invention.
Figure 5.- corresponds to an upper lateral perspective view of the conical rigid cage of the present invention.
Figure 6.- corresponds to a lateral view showing the conical rigid cage of the present invention incorporating nets.
Figure 7.- corresponds to a lateral view of a cross-section of Figure 6 of the conical rigid cage of the present invention.
Figure 8. corresponds to an upper perspective view of the cross-section of Figure 6 of the conical rigid cage of the present invention.

### PREFERRED EMBODIMENT OF THE INVENTION

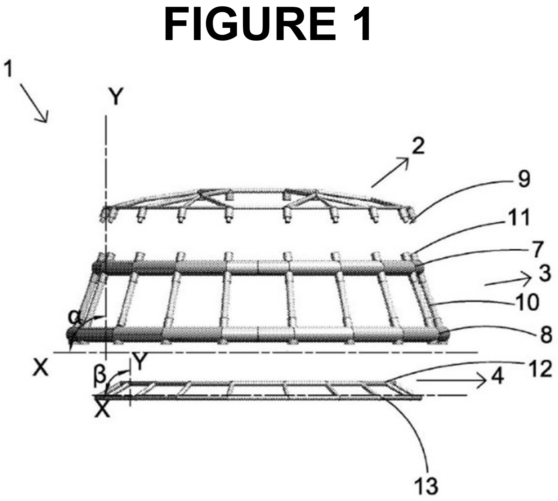

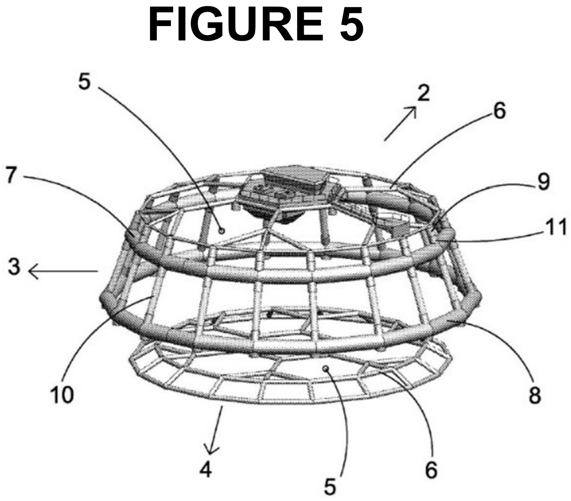

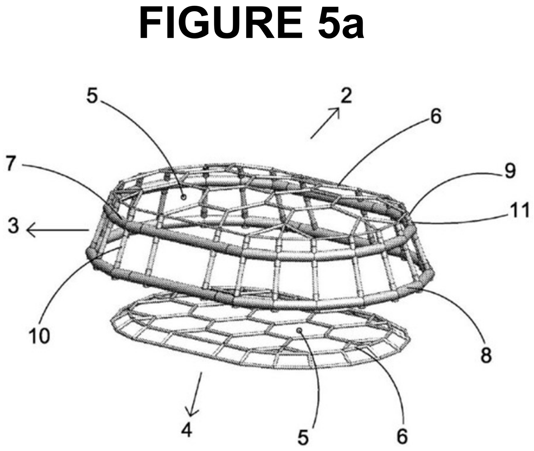

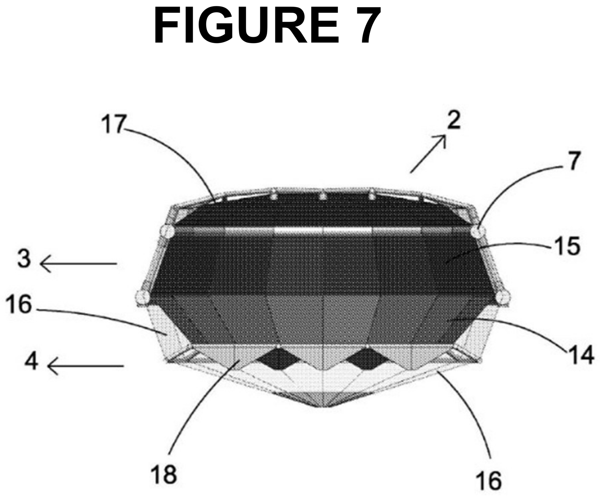

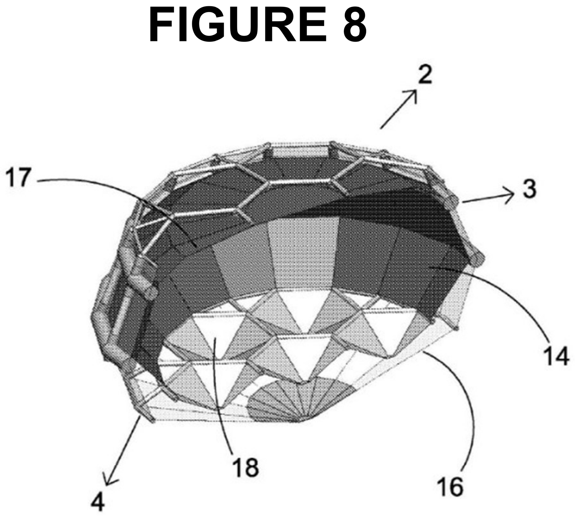

The invention corresponds to a conical rigid cage comprising at least one floating conical rigid structure (1), to form a variable interior three-dimensional volume for aquaculture cultivation, which comprises as basic constituent elements, at least one cover (2), at least one perimetral conical structure (3), and at least one independent vertically displaceable bottom (4), as can be seen in Figures 1 to 8.

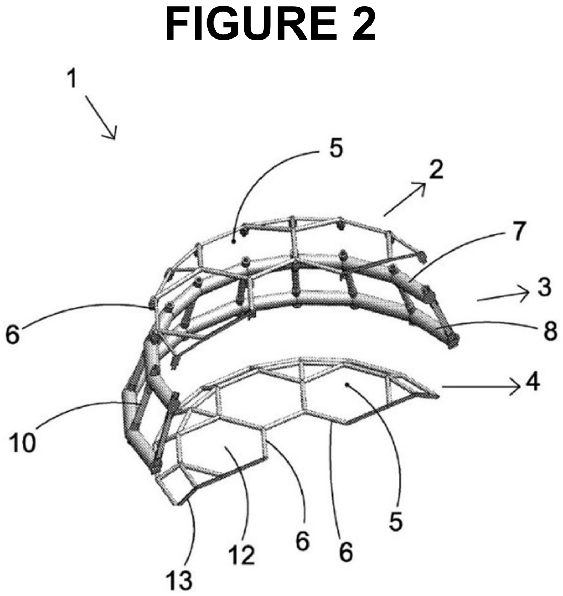

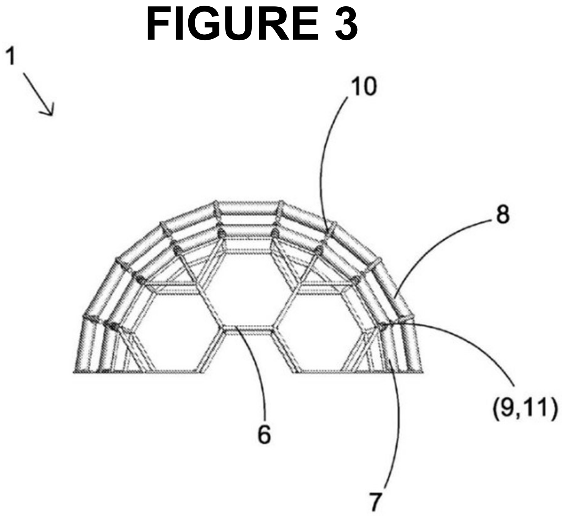

The at least one cover (2) and the at least one independent displaceable bottom (4) are configured by a basic structure formed by a series of structures with hexagonal geometric shapes (5) joined together, as shown in Figures 2 and 3, wherein each of said structures with hexagonal geometric shapes (5) is formed by tubular elements (6) joined together.

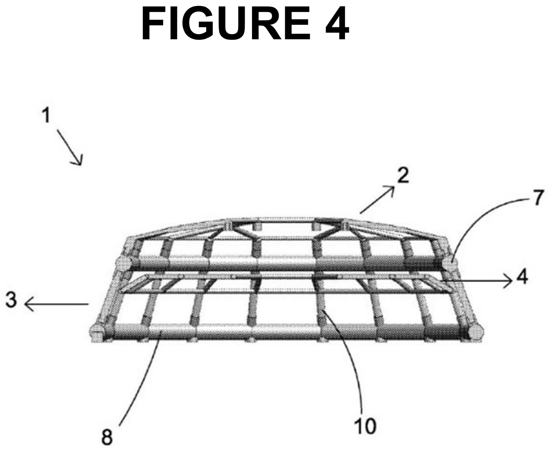

As shown in Figures 1 and 4, the at least one cover (2) has a three-dimensional shape, that is, it is not flat, preferably having a concave curvature, with the concave part facing downward, that is, toward the bottom of the water, when the cage is arranged in the sea, and further comprises connection elements or means (9) along its periphery.

As shown in Figures 1, 2, and 5, the at least one independent vertically slidable bottom (4) has at least one flat section (12) and at least one oblique perimetral separator ring section (13) joined to the perimeter of the at least one flat section (12), and which is arranged in an inclined manner at an angle (β) downward, that is, toward the sea bottom, with respect to the X-Y plane of the at least one flat section (12) of the at least one independent vertically slidable bottom (4), wherein the purpose of the configuration of said at least one oblique perimetral separator ring section (13) is to allow separating the fish net from the seal net or anti-predator net, and to contribute rigidity to the independent bottom (4), wherein said independent bottom (4) further has a diameter that is smaller than the diameter of the at least one lower tubular ring or section (8) of the at least one perimetral conical structure (3), and has a diameter equivalent to and/or smaller than the at least one upper tubular ring or section (7) of said at least one perimetral conical structure (3).

The at least one perimetral conical structure (3) comprises at least one upper tubular ring or section (7), which forms a flotation element of the structure, and at least one lower tubular ring or section (8), which forms a ballastable and/or flotation element, wherein said at least one lower tubular ring or section (8) is ballastable at will and serves to determine the variable draft or variable underwater hull of the floating rigid structure, wherein the at least one upper tubular ring or section (7) has a diameter smaller than the diameter of the at least one lower ring or section (8).

The at least one upper tubular ring or section (7) and the at least one lower tubular ring or section (8) are joined together through oblique tubular struts or columns (10). The at least one perimetral conical structure (3) forms the entire perimeter of the floating conical rigid structure (1) of the conical rigid cage, such that the at least one upper tubular ring or section (7) is located at water surface level serving as a float, and the at least one lower tubular ring or section (8) that is ballastable serves to produce the flotation and/or sinking of the floating conical rigid structure (1) in the body of water. The at least one upper tubular ring or section (7) comprises connection elements or means (11) along its periphery.

According to the configuration of the basic elements comprising the floating conical rigid structure (1) of the conical rigid cage, the at least one cover (2) is joined and/or fixed through connection elements or means (9) provided along its periphery, to the connection elements or means (11) that the at least one upper tubular ring or section (7) comprises along its periphery, such that this section of the floating rigid structure is arranged above the waterline, thus forming the freeboard section of the floating rigid structure (1).

A hoisting system joins the at least one independent vertically slidable bottom (4) to the at least one cover (2) at least three points of said at least one cover (2), allowing vertical displacement to vary the cultivation volume, as well as facilitating the harvesting of cultivated species, as well as facilitating sanitary baths, maintaining and/or changing the nets.

As illustrated in Figure 1, the configuration of the perimetral conical structure (3), viewed in top or in lateral form, includes an X axis and a Y axis, which define an X-Y plane, corresponding to the longitudinal axis X and the vertical axis Y, wherein the junction between the at least one upper tubular ring or section (7) and the at least one lower ring or section (8) by means of the oblique tubular struts or columns (10) forms an acute angle (α) in the X-Y plane, which can vary approximately in an angle of between 0 to 45°.

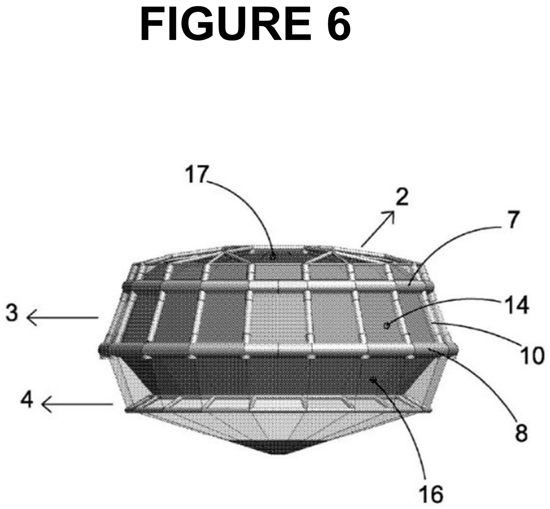

Figures 6 to 8 illustrate the conical rigid cage of the present invention with the arrangement of its nets for configuring the cultivation volume, wherein a fish net (14) is joined and/or fixed by a first upper end (15) to the upper ring or section (7) of the perimetral conical structure (3) and by a second lower end (16) to the peripheral structure of the at least one flat section (12) of the at least one independent vertically slidable bottom (4). A seal net and/or anti-predator net (16) is joined to the perimetral conical structure (3), either by its outer face and/or by panels joined to the sections formed between the structural elements that comprise it, as well as an upper section of said seal net being joined to the perimetral section of the at least one cover (2) by its upper end and wherein a lower section passes along the exterior of the at least one oblique perimetral separator ring section (13) of the at least one independent vertically slidable bottom (4) to a junction point of the bottom of said seal net, so as to completely surround the cultivation volume configured by the fish net (14) separately. A bird net (17) is joined, either above or below the at least one cover (2), to completely cover the cultivation volume. In a preferred embodiment of the invention, the conical rigid cage further comprises a mortality and/or waste collection system, configured by at least one conical collection element (18) configured in at least one of the structures with hexagonal geometric shapes (5) that form the at least one flat section (12) of the at least one independent vertically slidable bottom (4), wherein said at least one conical collection element (18) may be formed by at least one collection tarp and/or at least one collection cone.

As a geometric structural design, this difference in diameter between the upper and lower rings provides greater robustness to the structure, providing as advantages greater resistance with a minimum of material to be used and stability of the structure, greater internal cultivation volume, with a fish net and anti-predator net system, less structure volume above the water surface, greater stability of the structure when floating with the buoyancy provided by the lower flotation and/or ballastable ring, due to its greater diameter, extreme angles for unfavorable wave conditions, the diagonal struts or columns improve stability in oceanic wave conditions, since the weight distribution and the inclination configuration toward the center of the cage decreases the distance to the center of gravity, wherein the arrangement of its lateral walls with an opening angle provides greater resistance to the entire cage structure, without the need of a bottom joined to the structure that forms the cage.

As part of a structural element, the fact that the structure does not comprise a fixed bottom being part of the perimetral conical structure (3) allows providing an expandable or variable cultivation space or volume, wherein said cultivation volume can be expanded only with the nets or form an independent bottom joined with ropes, cables, or chains, furthermore the shape of the bottom, as well as its configuration with hexagonal geometric structures, and its independence, allows facilitating the installation of tarps or cones for mortality and/or waste collection, since deformations are minimal, the shape of the bottom also being ideal for the installation of oxygenation systems, allows the formation of flat bottoms to facilitate the cultivation of bottom aquaculture species, wherein the fact that it is displaceable further facilitates the harvesting of cultivated species, by facilitating raising the structure, up to approximately meeting the upper ring or section (7), also facilitating maintenance, net change, cleaning, sanitary baths, among others.

The fact that the bottom is configured to be linked independently and in a displaceable manner provides as advantages the ability to facilitate sanitary bath and/or harvesting operations, vary the cultivation volume, deepen the space and/or cultivation volume to deeper zones in the sea to avoid upwelling zones, by being able to displace said bottom at will, as well as the fact that the bottom is configured with at least one flat section with hexagonal geometric shape structures, provides numerous operational advantages, such as facilitating the arrangement of mortality and/or waste collection cones, bottom arrangement with collection tarps, facilitates the installation of oxygenation and waste suction systems.

The fact that the floating rigid structure (1) of the rigid cage is configured by at least one cover (2) and an independent vertically displaceable bottom (4) configured by hexagonal structural geometric shapes, provides a very efficient design, since the hexagonal geometric shape allows a uniform distribution of tensions, since they are distributed uniformly in all directions, which means that if pressure is applied to an area of the hexagon, that pressure will be distributed equally, which makes the structure strong and stable, hexagons are furthermore the most efficient shape for covering a large area with the least possible material, since they do not leave empty spaces, which maximizes space without sacrificing resistance, which means spatial efficiency, the hexagon has six sides and each side is connected with another in a manner that forms a strong and resistant repetitive pattern, achieving a strong connection of the structure, hexagons fit perfectly together, without overlaps or spaces, make maximum use of the material used, creating a solid structure without the need for excessive material, which produces an economy of material in the construction of the structure, to which is furthermore added that tubular materials of conventional dimensions can be used.

The configuration, shape, and design of the conical rigid cage of the present invention provides a floating rigid structure (1) of conical shape for use in aquaculture as a cultivation cage, which allows providing a robust and very stable structure, which allows efficiently disaggregating the stresses to which it is subjected through the structure with hexagonal geometric shape of the cover where forces are better distributed, providing extra strength to the stresses produced by waves, such as hogging stresses, sagging stresses, and torsion stresses, furthermore allowing the ability to arrange and contain large-sized structures, such as feeding silos, silage equipment, habitation modules, bridge controls, among others, as well as allowing simplification of the anchoring system.

Although the form of the conical rigid cage for aquaculture described herein constitutes a preferred embodiment of this invention, it should be understood that the invention is not limited to this precise form and that changes can be made thereto without departing from the scope of the invention, which are defined in the appended claims.

## Claims

1. A conical rigid cage comprising at least one floating conical rigid structure (1), for forming a variable interior three-dimensional volume for aquaculture cultivation, **CHARACTERIZED by** comprising at least one cover (2), at least one perimetral conical structure (3), and at least one independent vertically displaceable bottom (4), wherein the at least one perimetral conical structure (3) comprises at least one upper tubular ring or section (7) and at least one lower tubular ring or section (8), wherein the at least one upper tubular ring or section (7) has a diameter smaller than the diameter of the at least one lower ring or section (8), and are joined together through oblique tubular struts or columns (10), forming an acute angle (α) in the X-Y plane, which corresponds to the longitudinal axis X and the vertical axis Y, of the junction between said at least one upper tubular ring or section (7) and said at least one lower ring or section (8).

2. A conical rigid cage according to claim 1, **CHARACTERIZED in that** the at least one cover (2) and the at least one independent displaceable bottom (4) are configured by a basic structure formed by a series of structures with hexagonal geometric shapes (5) joined together, wherein each of said structures with hexagonal geometric shapes (5) is formed by tubular elements (6) joined together.

3. A conical rigid cage according to claims 1 and/or 2, **CHARACTERIZED in that** the at least one cover (2) has a three-dimensional shape, that is, it is not flat, preferably having a concave curvature, with the concave part facing downward, that is, toward the bottom of the water, when the cage is arranged in the sea, and further comprises connection elements or means (9) along its periphery.

4. A conical rigid cage according to claims 1, 2, and/or 3, **CHARACTERIZED in that** the at least one independent vertically slidable bottom (4) has at least one flat section (12) and at least one oblique perimetral separator ring section (13), joined to the perimeter of the at least one flat section (12), and which is arranged in an inclined manner at an angle (β) downward, that is, toward the sea bottom, with respect to the X-Y plane of the at least one flat section (12) of the at least one independent vertically slidable bottom (4).

5. A conical rigid cage according to the preceding claims, **CHARACTERIZED in that** said independent bottom (4) further has a diameter that is smaller than the diameter of the at least one lower tubular ring or section (8) of the at least one perimetral conical structure (3), and has a diameter equivalent to and/or smaller than the at least one upper tubular ring or section (7) of said at least one perimetral conical structure (3).

6. A conical rigid cage according to the preceding claims, **CHARACTERIZED in that** the at least one upper tubular ring or section (7) comprises connection elements or means (11) along its periphery.

7. A conical rigid cage according to the preceding claims, **CHARACTERIZED in that** the at least one cover (2) is joined and/or fixed through connection elements or means (9), provided along its periphery, to the connection elements or means (11) provided along the periphery of the at least one upper tubular ring or section (7).

8. A conical rigid cage according to the preceding claims, **CHARACTERIZED in that** the at least one independent vertically slidable bottom (4) is joined to the at least one cover (2) by means of a hoisting system on at least three points of said at least one cover (2).

9. A conical rigid cage according to the preceding claims, **CHARACTERIZED in that** the perimetral conical structure (3), viewed in top or in lateral form, has a configuration wherein an X axis and a Y axis, which define an X-Y plane, which correspond to the longitudinal axis X and the vertical axis Y, wherein the junction between the at least one upper tubular ring or section (7) and the at least one lower ring or section (8) by means of the oblique tubular struts or columns (10) forms an acute angle (α) in the X-Y plane, which can vary approximately in an angle of between 0 to 45°.

10. A conical rigid cage according to the preceding claims, **CHARACTERIZED in that** further comprises a fish net (14) that is joined and/or fixed by a first upper end (15) to the upper ring or section (7) of the perimetral conical structure (3) and by a second lower end (16) to the peripheral structure of the at least one flat section (12) of the at least one independent vertically slidable bottom (4).

11. A conical rigid cage according to the preceding claims, **CHARACTERIZED in that** further comprises a seal net and/or anti-predator net (16) that is joined to the perimetral conical structure (3), either by its outer face and/or by panels joined to the sections formed between the structural elements that comprise it, as well as an upper section of said seal net is joined to the perimetral section of the at least one cover (2) by its upper end and wherein a lower section passes along the exterior of the at least one oblique perimetral separator ring section (13) of the at least one independent vertically slidable bottom (4) to a junction point of the bottom of said seal net, so as to completely surround the cultivation volume configured by the fish net (14) separately.

12. A conical rigid cage according to the preceding claims, **CHARACTERIZED in that** further comprises a bird net (17) that is joined, either above or below the at least one cover (2), to completely cover the cultivation volume.

13. A conical rigid cage according to the preceding claims, **CHARACTERIZED in that** further comprises a mortality and/or waste collection system, configured by at least one conical collection element (18) formed in at least one of the structures with hexagonal geometric shapes (5) that form the at least one flat section (12) of the at least one independent vertically slidable bottom (4).

14. A conical rigid cage according to claim 13, **CHARACTERIZED in that** said at least one conical collection element (18) may be formed by at least one collection tarp and/or at least one collection cone.

15. A conical rigid cage according to the preceding claims, **CHARACTERIZED in that** further comprises an oxygenation system.
